# EUROPÄISCHE PATENTSCHRIFT

(11) **EP 2 750 913 B1**
(45) Veröffentlichungstag und Bekanntmachung des Hinweises auf die Patenterteilung: **04.10.2017**
(21) Anmeldenummer: 12750787.9
(22) Anmeldetag: 29.08.2012
(51) Int. Cl.: B60K 35/00, G06F 3/14, G09G 5/00, G09G 5/12

(54) **VERFAHREN ZUM BETREIBEN EINER STEUERVORRICHTUNG FÜR EIN DISPLAY EINES FAHRZEUGS UND ENTSPRECHEND ARBEITENDE STEUERVORRICHTUNG**
METHOD FOR OPERATING A CONTROL DEVICE FOR A DISPLAY OF A VEHICLE AND RESPECTIVELY OPERATING CONTROL DEVICE
PROCEDE POUR METTRE EN FONCTION UN DISPOSITIF DE COMMANDE D'UN AFFICHAGE DE VEHICULE ET DISPOSITIF DE COMMANDE FONCTIONNANT CONFORMEMENT

(30) Priorität: 31.08.2011 DE 102011081901
(43) Veröffentlichungstag der Anmeldung: 09.07.2014
(73) Patentinhaber: Bayerische Motoren Werke Aktiengesellschaft, 80809 München (DE)
(72) Erfinder: VON BEUNINGEN, Sven, 80686 München (DE); LUEKEN, Daniel, 81675 München (DE)
(86) Internationale Anmeldenummer: PCT/EP2012/066720
(87) Internationale Veröffentlichungsnummer: WO 2013/030204

(56) Entgegenhaltungen:
- EP-A1- 1 800 959
- EP-A1- 2 213 518
- DE-A1- 19 859 430
- JP-A- 2008 189 211
- US-A1- 2010 085 370

## Beschreibung

Die Erfindung betrifft ein Verfahren zum Betreiben einer Steuervorrichtung für ein Display, das in einem Fahrzeug angeordnet ist. Ferner betrifft die Erfindung die Steuervorrichtung für das Display.

Heutige Kombiinstrumentenanzeigeeinrichtungen von Fahrzeugen, beispielsweise von Kraftfahrzeugen, weisen mehrere Anzeigeinstrumente auf mittels denen verschiedene fahrzeugspezifische Informationen angezeigt werden können. Diese Anzeigeinstrumente können analoge Zeigeranzeigevorrichtungen umfassen, beispielsweise mechanische Rundinstrumente. Diese analogen Zeigeranzeigevorrichtungen werden bei modernen Fahrzeugen zunehmend durch Flüssigkristalldisplay-Anzeigen mit Anzeigefeldern ersetzt, die eine Vielzahl von Messgrößen und/oder Warnsignale optisch signalisieren. Für eine bessere Orientierung eines Fahrzeugnutzers zwischen den Anzeigefeldern erfolgt eine teilweise virtuelle dreidimensionale Darstellung der Anzeigefelder. Dies erfordert jedoch eine hohe Rechenleistung, insbesondere bei einer häufigen Aktualisierung der Anzeigefelder aufgrund von sich schnell ändernden Messgrößen.

Die Aufgabe, die der Erfindung zugrunde liegt, ist es, ein Verfahren zum Betreiben einer Steuervorrichtung für ein Display eines Fahrzeugs sowie eine Steuervorrichtung für ein Display zu schaffen, die es ermöglichen, dass Informationen, insbesondere fahrzeugrelevante Informationen, von dem Display zeitnah und/oder zeitrelevant angezeigt werden können und die einen Beitrag leisten, eine Qualität einer Darstellung der Informationen zu verbessern.

EP 2 213 518 A1 offenbart ein Anzeigesystem für ein bewegliches Objekt, das lenkbar ist, insbesondere für ein Fahrzeug. Das Anzeigesystem umfasst eine Anzeigevorrichtung, die ausgebildet ist, verschiedene Arten von Informationen, die das bewegliche Objekt betreffen, als Bild anzuzeigen. Das Anzeigesystem umfasst ferner eine Anzeigedatenausgabevorrichtung, die für vorgegebene Szenen jeweils ein Bild bereitstellt, das von der Anzeigevorrichtung angezeigt wird. Die Anzeigedatenausgabevorrichtung umfasst einen ersten Speicherbereich zum Speichern von Daten, die benötigt werden für die Anzeigevorrichtung, um alle Szenen anzeigen zu können. Ferner umfasst die Anzeigedatenausgabevorrichtung einen zweiten Speicherbereich zum Speichern von Daten, die von dem ersten Speicherbereich gesendet werden. Die Anzeigedatenausgabevorrichtung umfasst eine Anzeigedatenermittlungseinheit (Digitale Image Composer, DIC). Die Anzeigedatenermittlungseinheit ermittelt entsprechend einer von einem Mikrocomputer vorgegebenen Szene die Anzeigedaten. Die Anzeigedaten werden ermittelt abhängig von Streaming-Informationen und Anzeigedaten, die in dem zweiten Speicherbereich gespeichert sind.

US 2010/085370 A1 offenbart eine Anzeigesteuervorrichtung für eine Anzeigevorrichtung. Die Anzeige eines Bildes auf der Anzeigevorrichtung umfasst ein statisches Hintergrundbild und ein Wechselbild. Die Anzeigesteuervorrichtung ist ausgebildet, Pixelbeschreibungsdaten zu erfassen. Die Pixelbeschreibungsdaten umfassen eine Kombination von Positionsinformationen zum Spezifizieren einer Position in einem Pixel-Array und eine Adressinformation zum Spezifizieren einer Adresse in einer Bildspeichereinheit, in der Bilddaten gespeichert sind, die an der Position angezeigt werden, die durch die Positionsinformation spezifiziert ist. Ferner ist die Anzeigesteuervorrichtung ausgebildet, die Bilddaten von der Adresse der Bildspeichereinheit, die durch die Adressinformation spezifiziert ist, auszulesen und die Position in dem Pixel-Array zu ermitteln. Die Anzeigesteuervorrichtung gibt die ausgelesen Bilddaten an die Anzeigevorrichtung aus.

JP 2008 189211 A offenbart eine Fahrzeug-Anzeigevorrichtung, die ein Speichermittel zum Speichern von Anzeigedaten, die zum Erzeugen von Bildinformationen dienen. Ferner umfasst die Fahrzeug-Anzeigevorrichtung eine Steuereinrichtung, die eine Vielzahl von Fahrzeuginformationsarten empfängt und die Anzeigedaten für die jeweilige Fahrzeuginformation basierend auf einer vorgegebenen Priorität der Anzeige ermittelt. Die Steuereinrichtung ist ferner ausgebildet, die Anzeigedaten, die in dem Speichermittel gespeichert sind, zu aktualisieren und die Bildinformationen basierend auf den in dem Speichermittel gespeicherten Anzeigedaten an eine Anzeigeeinheit jeweils in einem vorgegebenen Bildaktualisierungszeitabschnitt auszugeben.

Die Aufgabe wird gelöst durch die Merkmale der unabhängigen Patentansprüche. Vorteilhafte Weiterbildungen der Erfindung sind in den Unteransprüchen gekennzeichnet.

Gemäß einem ersten Aspekt zeichnet sich die Erfindung aus durch ein Verfahren zum Betreiben einer Steuervorrichtung für ein Display, das in einem Fahrzeug angeordnet ist. Die Steuervorrichtung ist ausgebildet, Anzeigedaten für zumindest ein Anzeigeelement zu ermitteln. Das Display ist ausgebildet, das jeweilige Anzeigeelement optisch zu signalisieren abhängig von den für das jeweilige Anzeigeelement von der Steuervorrichtung ermittelten Anzeigedaten. Das Verfahren umfasst hierbei die folgenden Schritte: Für das jeweilige Anzeigeelement wird eine geschätzte Aktualisierungszeitdauer für eine Aktualisierung der Anzeigedaten des Anzeigeelements ermittelt, wobei das Aktualisieren der Anzeigedaten ein Ermitteln einer Anzeigegröße abhängig von einer erfassten Mess- und/oder Betriebsgröße und ein Ermitteln jeweiliger Bildpunktwerte für das Anzeigeelement umfasst Abhängig von der geschätzten Aktualisierungszeitdauer und einer vorgegebenen Bildrate wird die jeweilige Aktualisierung der Anzeigedaten des Anzeigeelements gesteuert.

Die Bildrate bezeichnet eine Anzahl von Einzelbildern, die in einem bestimmten Zeitabschnitt erfasst oder ermittelt werden. Eine Vertikalfrequenz repräsentiert eine Anzahl von Einzelbildern pro Sekunde, die zum Beispiel auf dem Display angezeigt werden. Die Bildrate der Steuervorrichtung kann verschieden sein von der Vertikalfrequenz des Displays. Die Bildrate und die Vertikalfrequenz sind vorzugsweise jeweils so zu wählen, dass dem menschlichen Auge bei bewegten Bildinhalten ein kontinuierlicher Bildeindruck vermittelt werden kann. Die Bildrate als ganzzahligen Teiler kleiner oder gleich der Vertikalfrequenz zu wählen, hat den Vorteil, dass gleichmäßig neue Bilder angezeigt werden können. Beträgt beispielsweise die Vertikalfrequenz 60 Hz und die Bildrate 30 fps wird jedes ermittelte Bild zweimal angezeigt. Eine ausreichende Qualität einer Darstellung kann erzielt werden, wenn die Bildrate gleich oder größer der zeitlichen Auflösung eines menschlichen Auges ist. Die vorgegebene Bildrate, die die Steuervorrichtung aufweisen soll, wird vorzugsweise abgestimmt auf die Vertikalfrequenz des Displays.

Vorteilhafterweise ermöglicht ein Steuern der Aktualisierung der Anzeigedaten des Anzeigeelements abhängig von der geschätzten Aktualisierungszeitdauer eine gewünschte Bildrate der Steuervorrichtung näherungsweise konstant zu halten und damit eine zur Verfügung stehende Rechenleistung der Steuervorrichtung optimal zu nutzen. Insbesondere ermöglicht es, eine gewünschte Bildrate nicht oder nur in wenigen Ausnahmefällen, beispielsweise in Fehlerfällen, zu unterschreiten. Eine Unterschreitung der vorgegebenen Bildrate kann dazu führen, dass ein Fahrzeugnutzer beim Betrachten des Displays keinen kontinuierlichen Bildeindruak wahrnimmt, sondern so genannte Ruckler. Eine Aktualisierung der Anzeigeelemente kann aufgrund von sich ändernden Fahrzeugdaten erforderlich sein. Diese Änderungen der Fahrzeugdaten können zu beliebigen Zeiten auftreten. Das Ermitteln der geschätzten Aktualisierungszeitdauer ermöglicht, zu entscheiden, ob eine Aktualisierung des Anzeigeelements noch während einer aktuellen Aktualisierungsphase ausgeführt werden kann oder nicht, so dass die gewünschte Bildrate nicht unterschritten wird. Die Aktualisierungsphase kann einen ersten Zeitabschnitt und einen zweiten Zeitabschnitt umfassen. Während des ersten Zeitabschnitts der Aktualisierungsphase können die während einer vorausgegangen Aktualisierungsphase für die jeweiligen Anzeigeelemente ermittelten Anzeigedaten in ein zur Anzeige auf dem Display geeignetes Datenformat überführt und in einen geeignet ausgebildeten Grafikspeicher geschrieben werden. Während eines zweiten Zeitabschnitts der Aktualisierungsphase können die jeweiligen Anzeigeelemente aktualisiert werden.

Das Anzeigeelement kann sich beispielsweise über einen vorgegebenen Anzeigebereich des Displays erstrecken. Das Anzeigeelement kann beispielsweise eine Tachometeranzeige und/oder eine Tankanzeige und/oder eine Drehzahlmessanzeige und/oder eine Modellanzeige des Fahrzeugs umfassen.

Eine Vertikalfrequenz des Displays kann konstant oder variabel vorgegeben sein. Bei einer Aktualisierung des jeweiligen Anzeigeelements werden die jeweiligen Anzeigedaten neu ermittelt und beispielsweise in dem geeignet ausgebildeten Grafikspeicher gespeichert. Bei einer konstanten Vertikalfrequenz werden in regelmäßigen zeitlichen Abständen die Anzeigedaten beispielsweise aus dem Grafikspeicher ausgelesen und mittels des Displays angezeigt. Das Display kann beispielsweise ausgebildet sein, eine vorgegebene Anzahl von Bildpunkten anzuzeigen. In diesem Fall umfassen die Anzeigedaten für den jeweiligen Bildpunkt des Anzeigeelements einen oder mehrere Bildpunktwerte.

Die Aktualisierung der Anzeigedaten kann mehrere Ermittlungsschritte umfassen. Das Aktualisieren der Anzeigedaten kann zum einen ein Ermitteln einer Anzeigegröße abhängig von einer erfassten Mess- und/oder Betriebsgröße umfassen. Zum anderen kann das Aktualisieren der Anzeigedaten das Ermitteln der jeweiligen Bildpunktwerte für das Anzeigeelement umfassen. Beispielsweise kann bei einer Änderung der Fahrzeuggeschwindigkeit abhängig von einer aktuell erfassten Fahrzeuggeschwindigkeit eine aktualisierte Winkelstellung einer Tachonadel ermittelt werden und die Bildpunkte für das Anzeigeelement, das den Tachometer umfasst, derart ermittelt werden, dass das Anzeigeelement auf dem Display das Tachometer mit einer Tachonadel repräsentiert, die die ermittelte Winkelstellung aufweist.

Die jeweilige Aktualisierungszeitdauer für eine Aktualisierung der jeweiligen Anzeigedaten kann variieren. Eine zeitliche Dauer für das Ermitteln der Anzeigegröße kann abhängig von der erfassten Mess- und/oder Betriebsgröße zeitlich variieren. Ferner kann eine zeitliche weitere Dauer für das Ermitteln der Bildpunkte des jeweiligen Anzeigeelements zumindest näherungsweise konstant sein oder variieren. Das Anzeigeelement kann darzustellende Zeichnungselemente aufweisen, deren Zahl und/oder Größe gleich bleibt. In diesem Fall kann die weitere Dauer für das Ermitteln der Bildpunkte näherungsweise konstant sein. Bei einer Tachoanzeige, bei der die Winkelstellung der Tachonadel die Fahrzeuggeschwindigkeit repräsentiert, bleibt die Anzahl der darzustellenden Zeichnungselemente beispielsweise gleich. Bei einer Tachoanzeige, bei der eine Anzahl von virtuellen Würfeln die Fahrzeuggeschwindigkeit repräsentiert, variiert insbesondere die Anzahl der darzustellenden Zeichnungselemente und damit die Dauer für das Ermitteln der Bildpunkte abhängig von der Fahrzeuggeschwindigkeit.

In einer vorteilhaften Ausgestaltung wird abhängig von der Bildrate eine Restzeitdauer ermittelt, die für die Aktualisierung der Anzeigedaten des jeweiligen Anzeigeelements zur Verfügung steht und abhängig von der Restzeitdauer wird die jeweilige Aktualisierung der Anzeigedaten des Anzeigeelements gesteuert. Die Restzeitdauer kann beispielsweise abhängig von der Dauer des ersten Zeitabschnitts und abhängig von bereits erfassten Aktualisierungszeitdauern für die jeweiligen Anzeigeelemente, die bereits während des zweiten Zeitabschnitts der Aktualisierungsphase aktualisiert wurden, ermittelt werden. Eine Entscheidung, ob ein weiteres Anzeigeelement während der Aktualisierungsphase aktualisiert wird, kann abhängig von der ermittelten Restzeitdauer und der geschätzten Aktualisierungszeitdauer für das jeweilige Anzeigeelement gefällt werden.

In einer weiteren vorteilhaften Ausgestaltung wird abhängig von einem Detektieren einer Aktualisierungsanforderung für das jeweilige Anzeigeelement die Aktualisierung der Anzeigedaten des Anzeigeelements gesteuert. Dies ermöglicht vorteilhafterweise, dass eine Aktualisierung des jeweiligen Anzeigeelements nach Bedarf gesteuert werden kann.

In einer weiteren vorteilhaften Ausgestaltung ist das jeweilige Anzeigeelement ausgebildet zum Signalisieren einer erfassten Betriebsgröße und/oder einer weiteren Information. Die Aktualisierungsanforderung ist hierbei repräsentativ für eine vorgegebene Abweichung zwischen einem ersten Wert und einem zweiten Wert der Betriebsgröße, die zeitlich aufeinanderfolgend in einem vorgegebenen zeitlichen Abstand erfasst werden, beziehungsweise für eine Änderung der weiteren Information. Die Aktualisierung des jeweiligen Anzeigeelements kann somit abhängig von einer Änderung der zu signalisierenden Information gesteuert werden.

In einer weiteren vorteilhaften Ausgestaltung ist dem jeweiligen Anzeigeelement eine Priorität zugeordnet. Abhängig von einem Wert, den die Priorität des jeweiligen Anzeigeelements aufweist, wird die Aktualisierung der Anzeigedaten des Anzeigeelements gesteuert, wobei der Wert der Priorität des jeweiligen Anzeigeelements angepasst wird, abhängig davon, ob während der Restzeitdauer die Aktualisierung der Anzeigedaten des Anzeigeelements ausgeführt wird oder nicht. Dies ermöglicht, Anzeigeelemente, die wichtige Informationen signalisieren, bei Bedarf bevorzugt zu aktualisieren, aber gleichzeitig sicherzustellen, dass das Aktualisieren von Anzeigeelementen, denen eine geringere Priorität zugeordnet ist, nicht verloren gehen.

In einer weiteren vorteilhaften Ausgestaltung wird die geschätzte Aktualisierungszeitdauer des jeweiligen Anzeigeelements ermittelt abhängig von zumindest einer während der Aktualisierung der Anzeigedaten des Anzeigeelements erfassten Aktualisierungszeitdauer. Dies ermöglicht ein einfaches Ermitteln der geschätzten Aktualisierungszeitdauer.

In einer weiteren vorteilhaften Ausgestaltung wird die geschätzte Aktualisierungszeitdauer für das jeweilige Anzeigeelement ermittelt abhängig von einer maximalen Aktualisierungszeitdauer, die aus einer vorgegebenen Menge von für das Anzeigeelement erfassten Aktualisierungszeitdauern ermittelt wird.

In einer weiteren vorteilhaften Ausgestaltung wird jeweils bei der Aktualisierung der Anzeigedaten des Anzeigeelements die Aktualisierungszeitdauer erfasst, und die Menge umfasst jeweils eine vorgegebene Anzahl der zuletzt erfassten Aktualisierungszeitdauern. Vorteilhafterweise können damit die Aktualisierungszeitdauern der jeweiligen Anzeigeelemente überwacht werden, zum Beispiel um Fehlerfälle zu erkennen. Ferner kann die geschätzte Aktualisierungszeitdauer abhängig von den zuletzt erfassten Aktualisierungszeitdauern einfach ermittelt werden.

In einer weiteren vorteilhaften Ausgestaltung wird die geschätzte Aktualisierungszeitdauer ermittelt abhängig von der erfassten Betriebsgröße und/oder der weiteren Information, die von dem Anzeigeelement signalisiert wird. Das Anzeigeelement kann Zeichnungselemente aufweisen, deren Anzahl und/oder Größe abhängig ist von der zu signalisierenden Betriebsgröße und/oder weiteren Informationen. Abhängig von der erfassten Betriebsgröße und/oder der weiteren Informationen kann beispielsweise ein variabler Anteil der geschätzten Aktualisierungszeitdauer ermittelt werden und die geschätzte Aktualisierungszeit einfach und zuverlässig ermittelt werden.

Gemäß einem zweiten Aspekt zeichnet sich die Erfindung aus durch eine Steuervorrichtung für ein Display, das in einem Fahrzeug angeordnet ist. Die Steuervorrichtung ist ausgebildet, Anzeigedaten für zumindest ein Anzeigeelement zu ermitteln. Das Display ist ausgebildet, das jeweilige Anzeigeelement optisch zu signalisieren abhängig von den für das jeweilige Anzeigeelement von der Steuervorrichtung ermittelten Anzeigedaten. Die Steuervorrichtung ist ferner ausgebildet für das jeweilige Anzeigeelement eine geschätzte Aktualisierungszeitdauer für eine Aktualisierung der Anzeigedaten des Anzeigeelements zu ermitteln, wobei das Aktualisieren der Anzeigedaten ein Ermitteln einer Anzeigegröße abhängig von einer erfassten Mess- und/oder Betriebsgröße und ein Ermitteln jeweiliger Bildpunktwerte für das Anzeigeelement umfasst. Die Steuervorrichtung ist des Weiteren ausgebildet, abhängig von der geschätzten Aktualisierungszeitdauer und einer vorgegebenen Bildrate die jeweilige Aktualisierung der Anzeigedaten des Anzeigeelements zu steuern. Vorteilhafte Ausgestaltungen des ersten Aspekts der Erfindung gelten hierbei auch für den zweiten Aspekt.

Ausführungsbeispiele der Erfindung sind im Folgenden anhand der schematischen Zeichnungen erläutert.

Es zeigen:
- Figur 1: ein schematisches Blockschaltbild mit einer Steuervorrichtung für ein Display eines Fahrzeugs,
- Figur 2: ein Ablaufdiagramm für ein erstes Programm zum Betreiben der Steuervorrichtung des Displays und
- Figur 3: ein Ablaufdiagramm für ein zweites Programm zum Betreiben der Steuervorrichtung des Displays.

Elemente gleicher Konstruktion oder Funktion sind figurenübergreifend mit den gleichen Bezugszeichen versehen.

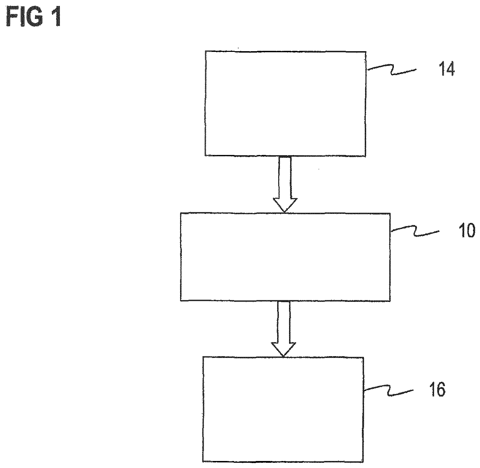

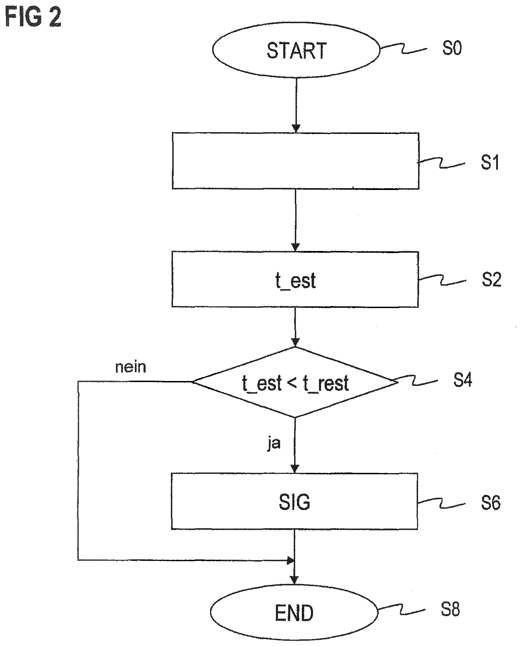

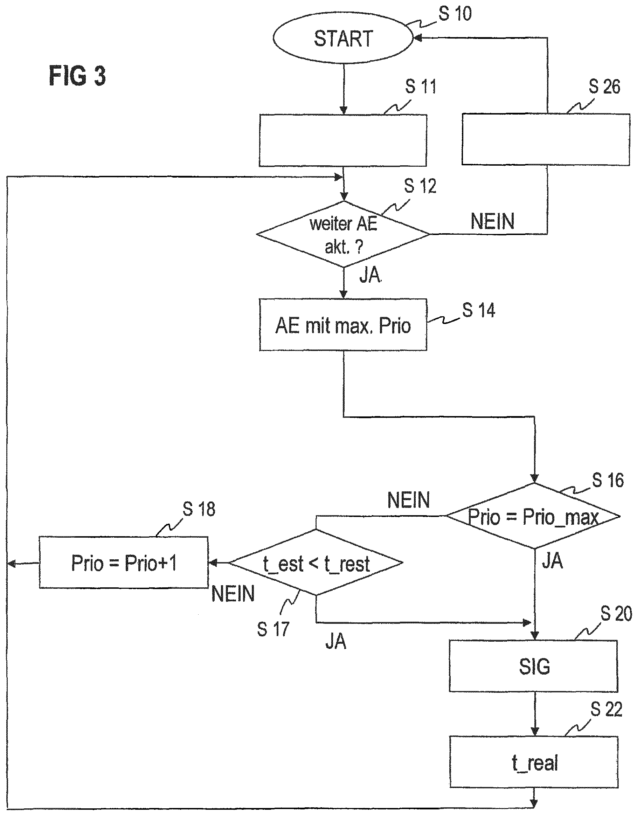

Figur 1 zeigt beispielhaft ein schematisches Blockschaltbild mit einer Steuervorrichtung 10 zum Betreiben eines Displays 16 eines Fahrzeugs. Die Steuervorrichtung 10 und das Display 16 sind beispielsweise in einem Kraftfahrzeug angeordnet. Alternativ oder zusätzlich kann die Steuervorrichtung 10 und das Display 16 beispielsweise in einem Flugzeug, Schiff und/oder einem Zug angeordnet sein und/oder in einer Trberwachungsstation zur Überwachung des Fahrzeugs. Die Steuervorrichtung 10 ist elektrisch gekoppelt mit dem Display 16. Die Steuervorrichtung 10 umfasst beispielsweise eine Recheneinheit sowie einen Programmspeicher, in dem ein erstes Programm und/oder ein zweites Programm gespeichert sind. Das erste Programm wird anhand von Figur 2 erläutert und das zweite Programm anhand von Figur 3. Die in Figur 1 gezeigte Steuervorrichtung 10 ist ausgebildet, das erste und/oder das zweite Programm auszuführen.

Die Steuervorrichtung 10 ist beispielsweise mit einer oder mehreren Mess- und/oder Steuereinheiten 14 des Fahrzeugs gekoppelt, die beispielsweise ausgebildet sind, eine oder mehrere Betriebsgrößen des Fahrzeugs zu erfassen. Die jeweilige Betriebsgröße kann eine Messgröße oder eine Zustandsgröße und/oder eine weitere aus Messgrößen und/oder Zustandsgrößen abgeleitete Größe umfassen. Die jeweilige Betriebsgröße kann ein Betriebszustand und/oder Fahrzustand und/oder einen Umgebungszustand des Fahrzeugs charakterisieren.

Das Display 16 ist beispielsweise als Flüssigkristallbildschirm ausgebildet. Alternativ oder Zusätzlich kann das Display 16 beispielsweise ein OLED-Display (organic light emitting diode, organische Leuchtdiode) und/oder eine Projektions-Display umfassen. Das Display 16 weist beispielsweise eine vorgegebene Anzahl von Bildpunkten auf. Das Display 16 ist beispielsweise in einem Armaturenbrett des Fahrzeugs angeordnet und wird beispielsweise als Kombiinstrumentenanzeige genutzt.

Die Steuervorrichtung 10 ist ausgebildet, Anzeigedaten für zumindest ein Anzeigeelement AE zu ermitteln und das Display 16 ist ausgebildet, das jeweilige Anzeigeelement AE optisch zu signalisieren abhängig von den für das jeweilige Anzeigeelement AE von der Steuervorrichtung 10 ermittelten Anzeigedaten. Das jeweilige Anzeigeelement AE kann beispielsweise eine Tachoanzeige, eine Tankfüllstandsanzeige, eine Temperaturanzeige, eine Drehzahlanzeige und/oder eine Warnsignalanzeige umfassen.

Das erste Programm dient dazu, eine Aktualisierung der Anzeigedaten des jeweiligen Anzeigeelements AE zu steuern. Das erste Programm wird in einem Schritt S0 gestartet. Der Start des ersten Programms erfolgt vorzugsweise mit einem aktiven Betriebszustand der Steuervorrichtung 10.

In einem Schritt S1 können beispielsweise Variablen initialisiert werden, beispielsweise Zähler.

In einem Schritt S2 wird für das jeweilige Anzeigeelement AE eine geschätzte Aktualisierungszeitdauer t_est für eine Aktualisierung der Anzeigedaten ermittelt. Die geschätzte Aktualisierungszeitdauer t_est des jeweiligen Anzeigeelements AE kann beispielsweise ermittelt werden abhängig von zumindest einer während einer vorangegangenen Aktualisierung der Anzeigedaten des Anzeigeelements AE erfassten Aktualisierungszeitdauer t_real. Beispielsweise kann die geschätzte Aktualisierungszeitdauer t_est ermittelt werden abhängig von einer maximalen Aktualisierungszeitdauer, die aus einer vorgegebenen Menge von für das Anzeigeelement AE erfassten Aktualisierungszeitdauern t_real ermitteln wird. Hierzu kann beispielsweise jeweils bei der Aktualisierung der Anzeigedaten des Anzeigeelements AE die Aktualisierungszeitdauer t_real erfasst werden. Die Menge kann beispielsweise eine vorgegebene Anzahl der zuletzt erfassten Aktualisierungszeitdauern t_real umfassen. Beispielsweise kann die geschätzte Aktualisierungszeitdauer t_est abhängig von der maximalen Aktualisierungszeitdauer aus der Menge der letzten zehn erfassten Aktualisierungszeitdauern t_real ermittelt werden. Beispielsweise kann die geschätzte Aktualisierungszeitdauer t_est diese maximale Aktualisierungszeitdauer repräsentieren.

Alternativ oder zusätzlich ist möglich, dass die geschätzte Aktualisierungszeitdauer t_est ermittelt wird abhängig von der erfassten Betriebsgröße und/oder der weiteren Information, die von dem Anzeigeelement AE signalisiert wird. Das Anzeigeelement AE kann Zeichnungselemente aufweisen, deren Anzahl und/oder Komplexität abhängig ist von der zu signalisierenden Betriebsgröße und/oder der weiteren Information. Beispielsweise kann abhängig von den für dieses Anzeigeelement AE erfassten Aktualisierungszeitdauern t_real für einen variablen Anteil der jeweiligen erfassten Aktualisierungszeitdauer t_real ein Skalierungsfaktor ermittelt werden und die geschätzte Aktualisierungszeitdauer t_est abhängig von dem Skalierungsfaktor und der zu signalisierenden Betriebsgröße und/oder weiteren Information ermittelt werden. Vorteilhaft kann dies beispielsweise für eine Textanzeige genutzt werden.

In einem Schritt S4 erfolgt eine Abfrage, ob ausreichend Zeit für die Aktualisierung des jeweiligen Anzeigeelements AE zur Verfügung steht. Die Überprüfung, ob ausreichend Zeit für die Aktualisierung des jeweiligen Anzeigeelements AE zur Verfügung steht, erfolgt abhängig von der jeweiligen geschätzten Aktualisierungszeitdauer t_est und einer vorgegebenen Bildrate. Die Vertikalfrequenz des Displays 16 kann fest vorgegeben sein, zum Beispiel 60 Hz. Die Bildrate kann in diesem Fall vorteilhaft mit 30 Hz oder 60 Hz vorgegeben werden. Alternativ kann vorgesehen sein, dass die Vertikalfrequenz des Displays 16 variabel vorgegeben werden kann.

Beispielsweise kann eine Restzeitdauer t_rest ermittelt werden abhängig von der Bildrate und beispielsweise einem ersten Zeitabschnitt. Der erste Zeitabschnitt kann beispielsweise eine Berechnungszeit, die benötigt wird, die Anzeigedaten in ein zur Anzeige auf dem Display geeignetes Datenformat zu überführen, und/oder eine Speicherzeit repräsentieren, die benötigt wird für ein Abspeichern der Anzeigedaten in einen Grafikspeicher, die während einer unmittelbar vorangegangenen Aktualisierungsphase der jeweiligen Anzeigeelemente AE ermittelt wurden. Ferner kann die Restzeitdauer t_rest ermittelt werden, abhängig von während der aktuellen Aktualisierungsphase bereits ausgeführten Aktualisierungen. Hierzu können beispielsweise die jeweiligen Aktualisierungszeitdauern t_real für die Anzeigeelemente AE erfasst werden.

Ergibt beispielsweise die Prüfung in Schritt S4, dass die geschätzte Aktualisierungszeitdauer t_est für das jeweilige Anzeigeelemente AE kleiner ist als die Restzeitdauer t_rest, wird beispielsweise in einem Schritt S6 ein Steuersignal SIG erzeugt und abhängig von dem Steuersignal führt die Steuervorrichtung 10 die Aktualisierung der Anzeigedaten für das Anzeigeelement AE durch.

Beispielsweise kann vorgesehen sein, dass für eine Aktualisierungsphase eine Menge an Anzeigeelementen AE vorgegeben wird, für die geprüft wird, ob eine Aktualisierung zeitlich möglich ist, und falls ja, die Aktualisierung durchgeführt wird. Hierzu kann das erste Programm mittels einer Schleifenanweisung in dem Schritt S2 fortgesetzt werden. Die Menge an Anzeigeelementen AE kann für die jeweilige Aktualisierungsphase unterschiedlich vorgegeben werden. Ist eine Aktualisierung sämtlicher Anzeigeelemente AE der vorgegebenen Menge überprüft und gegebenenfalls ausgeführt, kann das Programm in einem Schritt S8 beendet werden oder in dem Schritt S1 für eine neue Aktualisierungsphase fortgesetzt werden.

Beispielsweise kann vorgesehen werden, dass die Aktualisierung der jeweiligen Anzeigeelemente AE abhängig von einer Aktualisierungsanforderung und/oder einer Priorität der Anzeigeelemente AE gesteuert wird. Hierzu kann beispielsweise das zweite Programm zum Betreiben der Steuervorrichtung 10 genutzt werden.

Figur 3 zeigt das Ablaufdiagramm für das zweite Programm. Das zweite Programm wird in einem Schritt S10 gestartet. Der Start des zweiten Programms erfolgt vorzugsweise mit einem aktiven Betriebszustand der Steuervorrichtung 10. Das zweite Programm wird beispielsweise ausgeführt während die Steuervorrichtung 10 einen aktiven Betriebszustand aufweist.

In einem Schritt S11 können beispielsweise Variablen initialisiert werden, beispielsweise Zähler.

In einem Schritt S12 wird beispielsweise überprüft, ob für weitere Anzeigeelemente AE eine Aktualisierungsanforderung vorliegt. Die Aktualisierungsanforderung kann repräsentativ sein für eine vorgegebene Abweichung zwischen einem ersten Wert und einem zweiten Wert der zu signalisierenden Betriebsgröße, die zeitlich aufeinanderfolgend in einem vorgegebenen zeitlichen Abstand erfasst werden, beziehungsweise für eine Änderung der zu signalisierenden weiteren Information.

Falls für keine weiteren Anzeigeelemente AE Aktualisierungsanforderungen vorliegen, verharrt das Programm beispielsweise in einer Warteschleife S26, bis die Steuervorrichtung 10 die Anzeigedaten der aktualisierten Anzeigeelemente AE in dem Grafikspeicher abgespeichert hat. Anschließend wird das Programm in dem Schritt S11 fortgesetzt.

Ergibt die Prüfung in dem Schritt S12, dass für weitere Anzeigeelemente AE eine Aktualisierungsanforderung vorliegt, wird in dem Schritt S14 aus dieser Menge von Anzeigeelementen AE das Anzeigeelement AE ausgewählt, das aktuell den höchsten Wert für die Priorität aufweist.

In einem Schritt S16 wird beispielsweise geprüft, ob der Wert der Priorität dieses Anzeigeelements AE gleich einem vorgegebenen Höchstwert ist. Falls der Wert der Priorität gleich dem Höchstwert ist, wird in einem Schritt S20 beispielsweise das Steuersignal SIG erzeugt und abhängig von dem Steuersignal führt die Steuervorrichtung 10 die Aktualisierung der Anzeigedaten für das Anzeigeelement AE durch.

In einem Schritt S22, wird beispielsweise während der Aktualisierung des Anzeigeelements AE die Aktualisierungszeitdauer t_real erfasst. Ausgehend von dem Schritt S22 wird das Programm in dem Schritt S12 fortgesetzt.

Falls in dem Schritt S16 erkannt wird, dass der Wert der Priorität kleiner ist als der Höchstwert, wird in einem Schritt S17 die geschätzte Aktualisierungszeitdauer t_est für das Anzeigeelement AE ermittelt und geprüft, ob ausreichend Zeit für die Aktualisierung des jeweiligen Anzeigeelements AE zur Verfügung steht. Der Schritt S17 entspricht hierbei den Schritten S2 und S4 des ersten Programms.

Ergibt die Prüfung in dem Schritt S17, dass die geschätzte Aktualisierungszeitdauer t_est kleiner ist als die Restzeitdauer t_rest, wird das Programm in dem Schritt S20 fortgesetzt.

Ergibt die Prüfung in dem Schritt S17, dass die geschätzte Aktualisierungszeitdauer t_est größer ist als die Restzeitdauer t_rest, wird in einem Schritt S18 der Wert der Priorität des Anzeigeelements AE vorgegeben erhöht, beispielsweise um den Wert 1. Ausgehend von dem Schritt S18 wird das Programm in dem Schritt S12 fortgesetzt.

In dem zweiten Programm wird die geschätzte Aktualisierungszeitdauer t_est genutzt, um zu entscheiden, ob eine Aktualisierung des jeweiligen Anzeigeelements AE, für das bereits eine Aktualisierungsanforderung vorliegt, durchgeführt wird oder nicht. Wird die Aktualisierung des Anzeigeelements AE nicht durchgeführt, wird der Wert der Priorität des Anzeigeelements AE erhöht. Dadurch wird bei der nächsten Aktualisierungsphase das Anzeigeelement AE bevorzugt behandelt. Sollte die zur Verfügung stehende Zeit weiterhin bei der nächsten Aktualisierungsphase nicht ausreichen, wird der Wert der Priorität des Anzeigeelements AE solange weiter erhöht, bis der Wert der Priorität den vorgegebenen Höchstwert erreicht hat. Weist die Priorität den Höchstwert auf, so wird die Aktualisierung dieses Anzeigeelements AE ausgeführt, unabhängig von der für dieses Anzeigeelement AE geschätzten Aktualisierungszeitdauer t_est. Dies ermöglicht, dass Informationen, insbesondere fahrzeugrelevanten Informationen, von dem Display zeitnah und/oder zeitrelevant angezeigt werden und gleichzeitig eine Darstellung der Information mit hoher Qualität möglich ist.

### Bezugszeichenliste

- 10: Steuervorrichtung
- 14: Mess- und/oder Steuereinheit
- 16: Display
- AE: Anzeigeelement
- S0 ... S26: Programmschritte
- SIG: Signal
- t_est: geschätzte Aktualisierungszeitdauer
- t_real: erfasste Aktualisierungszeitdauer
- t_rest: Restzeitdauer

## Patentansprüche

1. Verfahren zum Betreiben einer Steuervorrichtung (10) für ein Display (16), das in einem Fahrzeug angeordnet ist, wobei die Steuervorrichtung (10) ausgebildet ist, Anzeigedaten für zumindest ein Anzeigeelement (AE) zu ermitteln, und das Display (16) ausgebildet ist, das jeweilige Anzeigeelement (AE) optisch zu signalisieren abhängig von den für das jeweilige Anzeigeelement (AE) von der Steuervorrichtung (10) ermittelten Anzeigedaten, bei dem das Verfahren folgende Schritte aufweist:
- für das jeweilige Anzeigeelement (AE) wird eine geschätzte Aktualisierungszeitdauer (t_est) für eine Aktualisierung der Anzeigedaten des Anzeigeelements (AE) ermittelt, und
- abhängig von der geschätzten Aktualisierungszeitdauer (t_est) und einer vorgegebenen Bildrate wird die jeweilige Aktualisierung der Anzeigedaten des Anzeigeelements (AE) gesteuert, **dadurch gekennzeichnet, dass** das Aktualisieren der Anzeigedaten ein Ermitteln einer Anzeigegröße abhängig von einer erfassten Mess- und/oder Betriebsgröße und ein Ermitteln jeweiliger Bildpunktwerte für das Anzeigeelement umfasst.

2. Verfahren nach Anspruch 1, bei dem abhängig von der Bildrate eine Restzeitdauer (t_rest) ermittelt wird, die für die Aktualisierung der Anzeigedaten des jeweiligen Anzeigeelements (AE) zur Verfügung steht und abhängig von der Restzeitdauer (t_rest) wird die jeweilige Aktualisierung der Anzeigedaten des Anzeigeelements (AE) gesteuert.

3. Verfahren nach Anspruch 1 oder 2, bei dem abhängig von einem Detektieren einer Aktualisierungsanforderung für das jeweilige Anzeigeelement (AE) die Aktualisierung der Anzeigedaten des Anzeigeelements (AE) gesteuert wird.

4. Verfahren nach einem der vorstehenden Ansprüche, bei dem das jeweilige Anzeigeelement (AE) ausgebildet ist zum Signalisieren einer erfassten Betriebsgröße und/oder einer weiteren Information und die Aktualisierungsanforderung repräsentativ ist
- für eine vorgegebene Abweichung zwischen einem ersten Wert und einem zweiten Wert der Betriebsgröße, die zeitlich aufeinanderfolgend in einem vorgegebenen zeitlichen Abstand erfasst werden, beziehungsweise
- für eine Änderung der weiteren Information.

5. Verfahren nach einem der vorstehenden Ansprüche, bei dem
- dem jeweiligen Anzeigeelement (AE) eine Priorität zugeordnet ist und
- abhängig von einem Wert, den die Priorität des jeweiligen Anzeigeelements (AE) aufweist, die Aktualisierung der Anzeigedaten des Anzeigeelements (AE) gesteuert wird, wobei der Wert der Priorität des jeweiligen Anzeigeelements (AE) angepasst wird, abhängig davon, ob während der Restzeitdauer (t_rest) die Aktualisierung der Anzeigedaten des Anzeigeelements (AE) ausgeführt wird oder nicht.

6. Verfahren nach einem der vorstehenden Ansprüche, bei dem die geschätzte Aktualisierungszeitdauer (t_est) des jeweiligen Anzeigeelements (AE) ermittelt wird abhängig von zumindest einer während der Aktualisierung der Anzeigedaten des Anzeigeelements (AE) erfassten Aktualisierungszeitdauer (t_real).

7. Verfahren nach Anspruch 6, bei dem
die geschätzte Aktualisierungszeitdauer (t_est) für das jeweilige Anzeigeelement (AE) ermittelt wird abhängig von einer maximalen Aktualisierungszeitdauer, die aus einer vorgegebenen Menge von für das Anzeigeelement (AE) erfassten Aktualisierungszeitdauern (t_real) ermittelt wird.

8. Verfahren nach Anspruch 7, bei dem
jeweils bei der Aktualisierung der Anzeigedaten des Anzeigeelements (AE) die Aktualisierungszeitdauer (t_real) erfasst wird, und die Menge jeweils eine vorgegebene Anzahl der zuletzt erfassten Aktualisierungszeitdauern (t_real) umfasst.

9. Verfahren nach einem der vorstehenden Ansprüche, bei dem die geschätzte Aktualisierungszeitdauer (t_est) ermittelt wird abhängig von der erfassten Betriebsgröße und/oder der weiteren Information, die von dem Anzeigeelement (AE) signalisiert wird.

10. Steuervorrichtung (10) für ein Display (16), das in einem Fahrzeug angeordnet ist, wobei die Steuervorrichtung (10) ausgebildet ist, Anzeigedaten für zumindest ein Anzeigeelement (AE) zu ermitteln, und das Display (16) ausgebildet ist, das jeweilige Anzeigeelement (AE) optisch zu signalisieren abhängig von den für das jeweilige Anzeigeelement (AE) von der Steuervorrichtung (10) ermittelten Anzeigedaten, und die Steuervorrichtung (10) ferner ausgebildet ist:
- für das jeweilige Anzeigeelement (AE) eine geschätzte Aktualisierungszeitdauer (t_est) für eine Aktualisierung der Anzeigedaten zu ermitteln, und
- abhängig von der geschätzten Aktualisierungszeitdauer (t_est) und einer vorgegebenen Bildrate die jeweilige Aktualisierung der Anzeigedaten des Anzeigeelements (AE) zu steuern, **dadurch gekennzeichnet, dass** das Aktualisieren der Anzeigedaten ein Ermitteln einer Anzeigegröße abhängig von einer erfassten Mess- und/oder Betriebsgröße und ein Ermitteln jeweiliger Bildpunktwerte für das Anzeigeelement umfasst.

## Claims

1. A method for operating a control device (10) for a display (16) which is arranged in a vehicle, wherein the control device (10) is designed to determine display data for at least one display element (AE), and the display (16) is designed to visually signal a specific display element (AE) depending on the display data determined for the specific display element (AE) by the control device (10), the method comprising the following steps:
- for a specific display element (AE), determining an estimated updating time period (t_est) for updating the display data of the display element (AE),
and
- controlling the updating of the display data of the display element (AE) depending on the estimated updating time period (t_est) and a predefined image rate, **characterised in that** the updating of the display data comprises a determination of a display variable depending on a detected measurand and/or operating variable and a determination of specific image point values for the display element.

2. A method according to claim 1, in which a remaining time period (t_rest) is determined depending on the image rate and is available for the updating of the display data of the specific display element (AE), and the updating of the display data of the display element (AE) is controlled depending on the remaining time period (t_rest).

3. A method according to claim 1 or 2, in which the updating of the display data of the display element (AE) is controlled depending on a detection of an updating requirement for the specific display element (AE).

4. A method according to any one of the preceding claims, in which the specific display element (AE) is designed to signal a detected operating variable and/or a further piece of information, and the updating requirement is representative
- of a predefined deviation between a first value and a second value of the operating variable which are detected sequentially in time in a predefined time interval, or
- of a change in the further information.

5. A method according to any one of the preceding claims, in which
- the specific display element (AE) is assigned a priority, and
- the updating of the display data of the display element (AE) is controlled depending on a value that comprises the priority of the specific display element (AE), wherein the value of the priority of the specific display element (AE) is adapted depending on whether or not the updating of the display data of the display element (AE) is carried out during the remaining time period (t_rest).

6. A method according to any one of the preceding claims, in which the estimated updating time period (t_est) of the specific display element (AE) is determined depending on at least one updating time period (t_real) detected during the updating of the display data of the display element (AE).

7. A method according to claim 6, in which the estimated updating time period (t_est) for the specific display element (AE) is determined depending on a maximum updating time period, which is determined from a predefined amount of updating time periods (t_real) detected for the display element (AE).

8. A method according to claim 7, in which the updating time period (t_real) is detected during the updating of the display data of the display element (AE), and the amount of updating time periods comprises a predefined number of the most recently detected updating time periods (t_real).

9. A method according to any one of the preceding claims, in which the estimated updating time period (t_est) is determined depending on the detected operating variable and/or the further information signalled by the display element (AE).

10. A control device (10) for a display (16) which is arranged in a vehicle, wherein the control device (10) is designed to determine display data for at least one display element (AE), and the display (16) is designed to visually signal the specific display element (AE) depending on the display data determined by the control device (10) for the specific display element (AE):
- an estimated updating time period (t est) for an updating of the display data is to be determined for the specific display element (AE), and
- the updating of the display data of the display element (AE) is to be controlled depending on the estimated updating time period (t_est) and a predefined image rate, **characterised in that** the updating of the display data comprises a determination of a display variable depending on a detected measurand and/or operating variable and a determination of specific image point values for the display element.

## Revendications

1. Procédé de gestion d'un dispositif de commande (10) d'un affichage (16) installé dans un véhicule,
- le dispositif de commande (10) déterminant des données d'affichage pour au moins un élément d'affichage (AE) et le dispositif d'affichage (16) signale optiquement l'élément d'affichage (AE) respectif en fonction des données d'affichage déterminées par le dispositif de commande (10) pour l'élément d'affichage (AE) respectif,
procédé consistant à exécuter les étapes suivantes :
- pour l'élément d'affichage respectif (AE) on détermine une durée d'actualisation évaluée (t_est) pour actualiser les données d'affichage de l'élément d'affichage (AE),
- en fonction de la durée d'actualisation évaluée (t_est) et d'une fréquence des images prédéfinies on commande l'actualisation respective des données d'affichage de l'élément d'affichage (AE),
**caractérisé en ce qu'**
actualiser les données d'affichage consiste à déterminer une grandeur d'affichage en fonction d'une grandeur de mesure et/ou de fonctionnement saisie et les valeurs respectives de points image pour l'élément d'affichage.

2. Procédé selon la revendication 1,
**caractérisé en ce qu'**
en fonction de la fréquence des images on détermine une durée résiduelle (t_rest) disponible pour actualiser les données d'affichage de l'élément d'affichage (AE) respectif et en fonction de cette durée résiduelle (t_rest) on commande l'actualisation respective des données d'affichage de l'élément d'affichage (AE).

3. Procédé selon la revendication 1 ou 2,
**caractérisé en ce qu'**
en fonction de la détection d'une requête d'actualisation pour l'élément d'affichage respectif (AE) on commande l'actualisation des données d'affichage de l'élément d'affichage (AE).

4. Procédé selon l'une des revendications précédentes,
**caractérisé en ce que**
l'élément d'affichage (AE) est réalisé pour signaler une grandeur de fonctionnement saisie et/ou une autre information et la requête d'actualisation est représentative,
- d'un écart prédéfini entre une première valeur et une seconde valeur de la grandeur de fonctionnement, qui doivent être saisies dans la l'ordre chronologique dans un intervalle de temps prédéfini, ou
- d'une modification des autres informations.

5. Procédé selon l'une des revendications précédentes,
**caractérisé en ce qu'**
- une priorité est attribuée à l'élément d'affichage respectif (AE) et,
- en fonction d'une valeur que présente la priorité de l'élément d'affichage respectif (AE), on commande l'actualisation des données d'affichage de l'élément d'affichage (AE), la valeur étant adaptée à la priorité de l'élément d'affichage (AE) respectif en fonction de ce que pendant la durée résiduelle (t_rest) on actualise ou non les données d'affichage de l'élément d'affichage (AE).

6. Procédé selon l'une des revendications précédentes,
**caractérisé en ce qu'**
on détermine la durée d'actualisation évaluée (t_est) de l'élément d'affichage (AE) respectif en fonction d'au moins une durée d'actualisation (t_real) saisie pendant l'actualisation des données d'affichage de l'élément d'affichage (AE).

7. Procédé selon la revendication 6,
**caractérisé en ce qu'**
on détermine la durée d'actualisation évaluée (t_est) pour l'élément d'affichage (AE) respectif en fonction d'une durée d'actualisation maximale qui se détermine à partir d'un ensemble prédéfini de durées d'actualisation (t_real), saisies pour l'élément d'affichage (AE).

8. Procédé selon la revendication 7,
selon lequel à chaque actualisation des données d'affichage de l'élément d'affichage (AE) on saisit la durée d'actualisation (t_real) et l'ensemble comprend chaque fois un nombre prédéfini de durées d'actualisation (t_real) saisies en dernier lieu.

9. Procédé selon l'une des revendications précédentes, selon lequel on détermine la durée d'actualisation évaluée (t_est) en fonction de la grandeur de fonctionnement saisie et/ou de l'autre information qui a été signalée par l'élément d'affichage (AE).

10. Dispositif de commande (10) pour un affichage (16) équipant un véhicule, le dispositif de commande (10) déterminant des données d'affichage pour au moins un élément d'affichage (AE) et l'affichage (16) signalant l'élément d'affichage (AE) respectif de manière optique en fonction des données d'affichage déterminées pour l'élément d'affichage (AE) respectif par le dispositif de commande (10) et ce dispositif de commande (10) étant en outre réalisé pour :
- déterminer l'élément d'affichage (AE) respectif avec une durée d'actualisation évaluée (t_est) pour une actualisation des données d'affichage et,
- commander l'actualisation respective des données d'affichage de l'élément d'affichage (AE) en fonction de la durée d'actualisation évaluée (t_est) et pour une fréquence d'images donnée,
dispositif **caractérisé en ce que**
l'actualisation des données d'affichage consiste à déterminer une grandeur d'affichage en fonction d'une grandeur de mesure et/ou de fonctionnement saisie et les valeurs respectives de points-image pour l'élément d'affichage.
